# EUROPEAN PATENT SPECIFICATION

(11) **EP 2 844 967 B1**
(45) Date of publication and mention of the grant of the patent: **24.03.2021**
(21) Application number: 13784444.5
(22) Date of filing: 24.04.2013
(51) Int. Cl.: G01G 11/00, G01G 21/24, G01G 11/04

(54) **Weighing Apparatus**
Wiegevorrichtung
Dispositif de pesage

(30) Priority: 04.05.2012 ZA 201203223
(43) Date of publication of application: 11.03.2015
(73) Proprietor: Naidu, Naran, 1000 Cullinan (ZA)
(72) Inventor: NAIDU, Ranard, 1000 Cullinan (ZA); NAIDU, Naran, 1000 Cullinan (ZA)
(74) Representative: Tomkins & Co
(86) International application number: PCT/ZA2013/000028
(87) International publication number: WO 2013/166527

(56) References cited:
- EP-A1- 2 120 022
- DE-A1- 3 641 410
- DE-A1- 19 859 992
- US-A- 2 954 969
- US-A- 3 141 516
- US-A- 4 799 562
- US-A- 5 343 000

## Description

### BACKGROUND OF THE INVENTION

THIS invention relates to a weighing module. More specifically, the invention relates to a weighing module, which individually or together with other weighing modules, acts as a single idler weighing apparatus for a conveyor belt assembly.

Many types of single idler weighing apparatus are known. Most however, are not accurate in that the weight recording is influenced by dynamic forces associated with conveyor movement.

An example of a known weighing apparatus is disclosed in US patent no. 2,954,969 (McCullough), which document describes the use of a hinged type brace device to restrain the belt load responsive mechanism (i.e. a load cell, differential transformer or similar) from being affected by forces horizontal to the belt.

The struts (36, 38) making up such parallelogram are not parallel. This, together with the use of universal bearings to join up the struts (which allows movement of the hinged parallelogram type brace device in more than one plane) and a single, centrally located load responsive mechanism will not be capable of providing the accuracies required in modern day conveyor systems, particularly at the much higher throughputs expected of such systems today.

US patent no. 3,141,516 (Moring, Junior) discloses another example of a known weighing apparatus, which is believed to have less accuracy than the apparatus disclosed by McCullough due to its use of a lever mechanism.

US patent no. 4,799,562 (Everest & Jennings Canadian Limited) again discloses a single, centrally located load responsive mechanism, which will not be capable of providing the accuracies required in modern day conveyor systems where the load must be measured across the width of the conveyor belt.

It is therefore an object of the invention to provide a more accurate single idler weighing apparatus that minimises the effects of dynamic forces associated with conveyor movement, both simply and cost effectively.

### SUMMARY OF THE INVENTION

According to the invention there is provided a weighing apparatus for weighing a load applied to a conveyor belt assembly including:
a pair of weighing modules each comprising:
   at least one first mounting and at least one second mounting being attachable to a primary housing, the primary housing being attachable to an idler assembly of the conveyor belt assembly such that the first and the second mountings are spaced apart from one another;
   at least one third mounting and at least one fourth mounting being attachable to a secondary housing, the secondary housing being attachable to a runner structure of the conveyor belt assembly such that the third and the fourth mountings are spaced apart from one another;
   at least a first bar member having a first end pivotally mounted to the first mounting and an opposing second end pivotally mounted to the third mounting;
   at least a second bar member having a first end pivotally mounting to the second mounting and an opposing second end for pivotally mounting to the fourth mounting such that the primary and the secondary housings are spaced apart from one another by the bar members to define a gap between the primary and the secondary housings, characterized in that each end of the bar members is pivotally mounted on the mountings by a mounting pin passing through correspondingly aligned mounting apertures defined in the respective end of the bar members and the respective mounting so as to retain the first and the second bar members of each of the respective weighing modules in a spaced apart and parallel orientation relative to one another; and
   one or more load cells connected between the primary and the secondary housings across the gap defined between the primary and the secondary housings ;
further characterized in that the weighing apparatus includes a cross member connecting the secondary housings of each of the weighing modules to one another;
such that in use and under load, the bar members and mountings co-operate with one another to substantially nullify any force component acting in a plane coplanar or substantially parallel to a plane in which the bar members lie, thereby to enable the load cell to measure substantially only a strain caused by the weight of the load on the conveyor belt assembly.

In a first preferred embodiment, each of the mountings is a fork-like mounting formation for receiving the respective end of the respective bar member, the mounting pin pivotally capturing the end of the bar member within the fork-like mounting formation.

In an alternative embodiment, each of the mountings comprise a male mounting formation and each of the ends of the bar members are fork-like formations for receiving the male mounting formation therein, the mounting pin pivotally capturing the male mounting formation of the mounting within the fork-like mounting formation of the bar members.

The first and second mountings of each of the weighing modules are typically opposing ends of a common primary mounting member, the common primary mounting member being attachable to the primary housing. Furthermore, the third and the fourth mountings of each of the weighing modules are generally opposing ends of a common secondary mounting member, the common secondary mounting member being attachable to the secondary housing. Preferably, the mounting pins ride on bearings mounted in the mountings, in the ends of the bar members or in both.

Preferably, the primary and the secondary housings of each of the weighing modules include a base member and a cover member, the base member comprising a base with sidewalls extending outwardly there from, the cover member being engagable with the sidewalls to define, between the base, the sidewalls and the cover member, an inner cavity for housing the common mounting members and respective ends of the bar members mounted thereto.

Preferably, the primary housings of each of the weighing modules are attachable to the idler assembly by idler support brackets (46) extending outwardly from the primary housing and the secondary housings of each of the weighing modules are attachable to the runner structure by mounting brackets extending outwardly from the secondary housing. The primary and the secondary housings being attachable to the respective idler assembly and runner structure by fasteners. More preferably, the fasteners are buts and bolts.

In accordance with a second aspect of the invention, there is provided an idler assembly for weighing a load passing there over including:
a support bracket or supporting one or more idler mounting sub-brackets on which idlers are supportable;
a weighing apparatus in accordance with aforementioned description, the primary housings of each of the weighing modules being attached to opposing ends of the support bracket; and
a cross member attached at each opposing end to the secondary housings of the weighing modules, the secondary housings being attachable to opposing sides of a runner structure of the conveyor belt assembly.

### BRIEF DESCRIPTION OF THE DRAWINGS

The invention will now be described in more detail, by way of example only, with reference to the accompanying drawings in which:
- **Figure 1**: is a perspective view of a weighing module in accordance with the present invention;
- **Figure 2**: is a front view of the weighing module of figure 1;
- **Figure 3**: is a rear view of the weighing module of figure 1;
- **Figure 4**: is a side view of the weighing module of figure 1;
- **Figure 5**: is a top view of the weighing module of figure 1;
- **Figure 6**: is a bottom view of the weighing module of figure 1; and
- **Figure 7**: is a perspective view of the weighing apparatus made up of a pair of weighing modules fitted on an idler assembly.

### DETAILED DESCRIPTION OF THE DRAWINGS

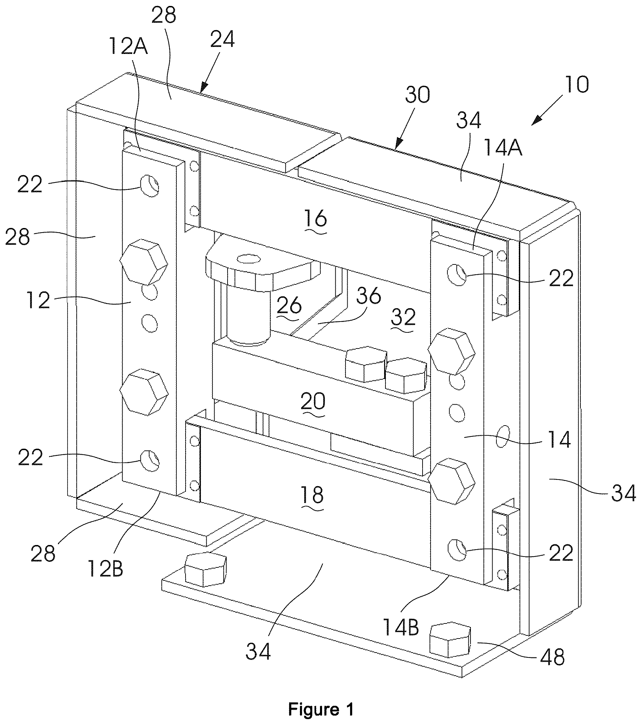

A weighing module according to a preferred embodiment of the invention is designated generally with reference numeral 10 in figure 1. The weighing module 10 comprises mountings 12,14, first and second bar members 16,18 extending between the mountings 12,14 and a load cell 20. Although the mountings 12,14 have been illustrated in the accompanying figures as common primary and secondary mounting members 12,14, each of the mountings may be separate and individual mountings.

The common primary mounting member 12 comprises fork-like mounting formations 12A,12B. Similarly, the common secondary mounting member 14 comprises fork-like mounting formations 14A,14B. The fork-like mounting formations 12A,12B,14A,14B are sized and shaped to receive respective ends of the bar members 16,18. The respective ends of the bar members 16,18 are pivotally captured in the respective fork-like mounting formations 12A,12B,14A,14B in mounting pins (not shown) passing through correspondingly aligned mounting apertures 22 defined in the common primary and secondary mounting members 12,14 and the bar members 16,18. In this configuration, the bar members 16,18 are retained in a spaced apart, parallel orientation with respect to each other.

Although the common primary and secondary mounting members 12,14 have been illustrated with fork-like mounting formations 12A,12B,14A,14B, it will be appreciated that in an alternative embodiment, the common primary and secondary mounting members 12,14 could comprise male mounting formations pivotally captured within fork-like formations on the opposing ends of the bar members 16,18. In either embodiment, it is preferable for the mounting pins to ride on bearings (not shown) mounted in the common primary and secondary mounting members 12,14 and/or the bar members 16,18

The common primary mounting member 12 is mounted on a primary mounting body in the form of a primary housing 24 having a base 26, sidewalls 28 and a cover member (not shown), the cover member being engagable with the sidewalls 28 to define, between the base 26, the sidewalls 28 and the cover member, an inner cavity for housing at least the common primary mounting member 12 and the respective ends of the bar members 16, 18.

The common secondary mounting member 14 is mounted on a secondary mounting body in the form of a secondary housing 30 having a base 32, sidewalls 34 and a cover member (not shown), the cover member being engagable with the sidewalls 34 to define, between the base 32, the sidewalls 34 and the cover member, an inner cavity for housing at least the common secondary mounting member 14 and the respective ends of the bar members 16, 18. The bar members 16,18 space the primary and the secondary housings 24,30 from one another so as to define a gap 36 between there between, across which the load cell 20 is operative.

It will be appreciated that the weighing module 10 may be retrofitted directly to an object for the purposes of weighing the load applied to the object. Alternatively, a pair of weighing modules 10 may be fixed to one another to form a weighing apparatus 200 for weighing the load passing over a single idler assembly 300 on a conveyor belt assembly.

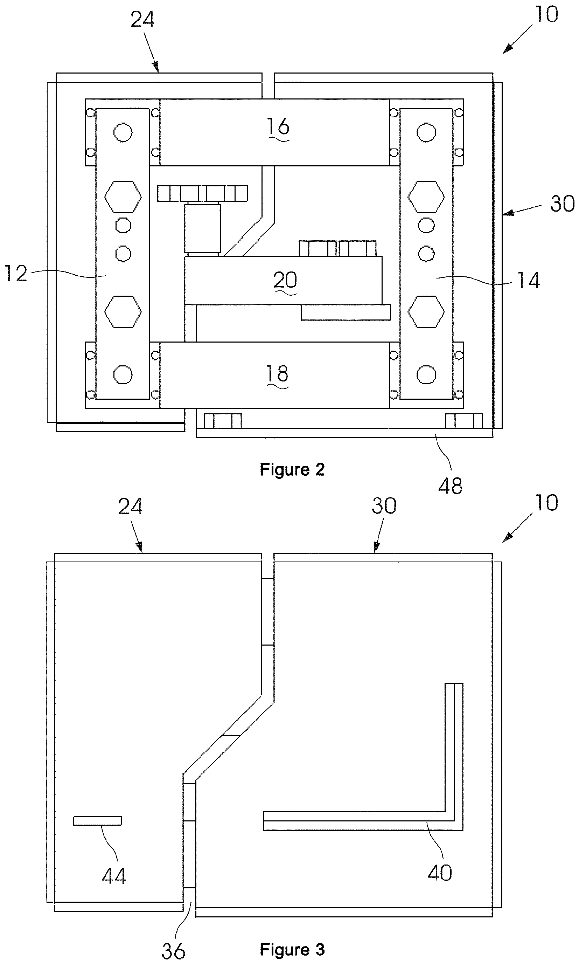

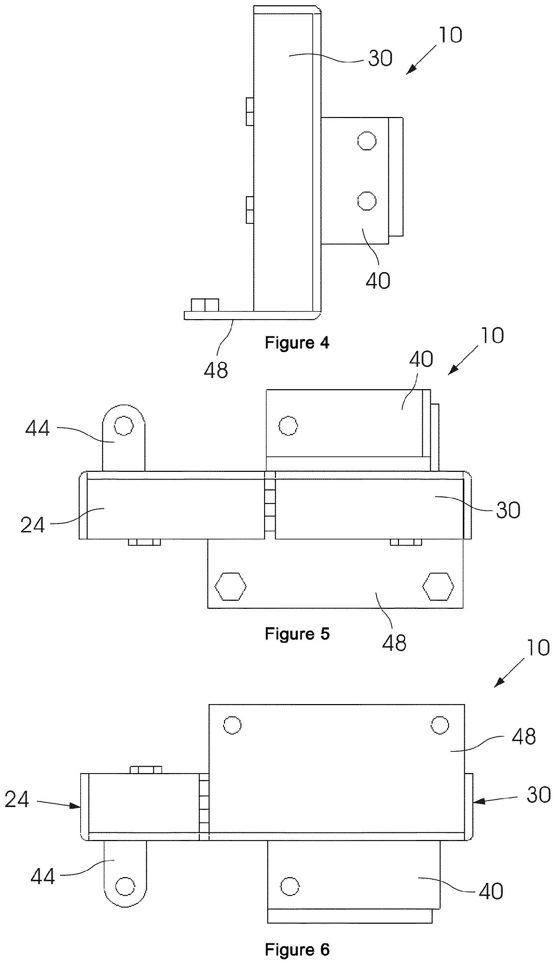

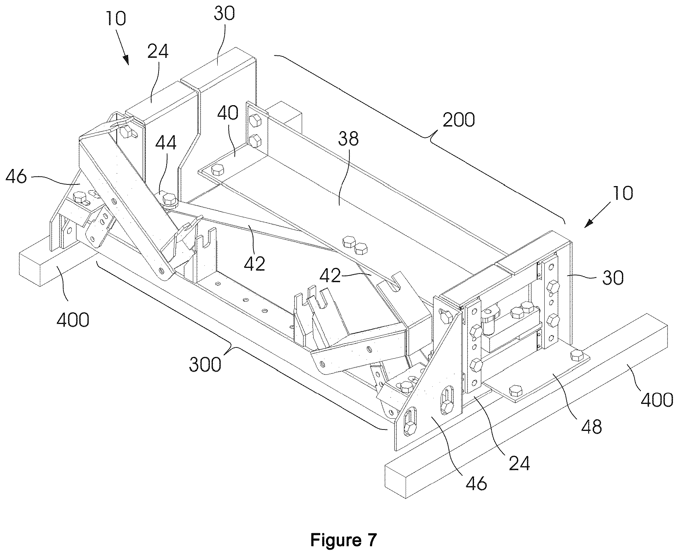

With reference now also to figures 2 to 7, the weighing apparatus 200 is made up of a pair of weighing modules 10 fixed to one another across a cross member 38, fastened to cross member brackets 40 extending outwardly from the secondary housing 30 of each of the weighing modules 10. To further support the weighing modules 10, brace members 42 are secured between a brace support bracket 44 extending outwardly from the primary housing 30 of each of the weighing modules 10 and the cross member 38.

Extending outwardly from each of the primary housings 24 are idler assembly support brackets 46 onto which an idler assembly 300 is supportable. It will be appreciated that the weighing apparatus 200 may be retrofitted to an existing idler assembly on a conveyor belt assembly or purpose built onto an idler assembly, mountable to runners 400 of the conveyor belt assembly on mounting brackets 48 extending outwardly from the secondary housings 30 of each of the weighing modules 10.

In use, the bar members 16,18 and mountings 12,14 co-operate with one another to substantially nullify any force component acting in a plane coplanar or substantially parallel to a plane in which the bar members 16,18 lie, thereby to enable the load cell 20 to measure substantially only a strain caused by the weight of a load on the idler assembly 300 (or other object).

Although the invention has been described above with reference to preferred embodiments, it will be appreciated that many modifications or variations of the invention are possible without departing from the spirit or scope of the invention.

For example, it will be appreciated that the mounting pins could be affixed directly to primary and secondary housings 24,30, with the bar members 16,18 pivotally mounted thereon. However, the direct mounting of the mounting pins 22 to the primary and secondary housings 24,30 is a contributing factor to the possible inaccuracy of the weighing module 10.

As a result, it has been found that the accuracy of the weighing module 10 can be increased by pivotally mounting the bar members 16,18 on mounting pins passing through correspondingly aligned mounting apertures 22 in the bar members 16,18 and precision manufactured common mounting members 12,14 being fixed to the primary and secondary housings 24,30. Under this new method of manufacturing the weighing module 10, the mounting pins float in a spaced apart relationship relative to the primary and secondary housings 24,30. It will be appreciated further that the bearings on which the mounting pins ride, further increase the accuracy of the weighing module 10.

## Claims

1. A weighing apparatus (200) for weighing a load applied to conveyor belt assembly including:
a pair of weighing modules (10) each comprising:
at least one first mounting (12A) and at least one second mounting (12B) being attachable to a primary housing (24), the primary housing (24) being attachable to an idler assembly (300) of the conveyor belt assembly such that the first and the second mountings are spaced apart from one another;
at least one third mounting (14A) and at least one fourth mounting (14B) being attachable to a secondary housing (30), the secondary housing (30) being attachable to a runner structure (400) of the conveyor belt assembly such that the third and fourth mountings are spaced apart from one another;
at least a first bar member (16) having a first end pivotally mounted to the first mounting (12A) and an opposing second end pivotally mounted to the third mounting (14A);
at least a second bar member (18) having a first end pivotally mounting to the second mounting (12B) and an opposing second end for pivotally mounting to the fourth mounting (14B) such that the primary and the secondary housings (24, 30) are spaced apart from one another by the bar members (16, 18) to define a gap (36) between the primary and the secondary housings (24, 30), wherein each end of the bar members (16, 18) is pivotally mounted on the mountings by a mounting pin passing through correspondingly aligned mounting apertures (22) defined in the respective end of the bar members (16, 18) and the respective mounting so as to retain the first and the second bar members (16, 18) of each of the respective weighing modules in a spaced apart and parallel orientation relative to one another; and
one or more load cells (20) connected between the primary and the secondary housings (24, 30) across the gap (36) defined between the primary and the secondary housings (24, 30);
wherein the weighing apparatus (200) includes a cross member (38) connecting the secondary housings (30) of each of the weighing modules (10) to one another;
such that in use and under load, the bar members (16, 18) and mountings (12A, 12B; 14A, 14B) co-operate with one another to substantially nullify any force component acting in a plane coplanar or substantially parallel to a plane in which the bar members (16, 18) lie, thereby to enable the load cell (20) to measure substantially only a strain caused by the weight of the load on the conveyor belt assembly.

2. A weighing apparatus (200) according to claim 1, wherein each of the mountings (12A, 12B, 14A, 14B) is a fork-like mounting formation for receiving the respective end of the respective bar member (16, 18), the mounting pin pivotally capturing the end of the bar member (16, 18) within the fork-like mounting formation (12A, 12B, 14A, 14B).

3. A weighing apparatus (200) according to claim 1, wherein each of the mountings (12A, 12B, 14A, 14B) comprise a male mounting formation and each of the ends of the bar members (16, 18) are fork-like formations for receiving the male mounting formation therein, the mounting pin pivotally capturing the male mounting formation of the mounting within the fork-like mounting formation of the bar members (16, 18).

4. A weighing apparatus (200) according to any one of claims 1 to 3, wherein:
(i) the first and second mountings (12A, 12B) of each of the weighing modules (10) are opposing ends of a common primary mounting member (12), the common primary mounting member (12) being attachable to the primary housing (24); and
(ii) the third and the fourth mountings (14A, 14B) of each of the weighing modules (10) are opposing ends of a common secondary mounting member (14), the common secondary mounting member (14) being attachable to the secondary housing (30).

5. A weighing apparatus (200) according to claim 4, wherein the mounting pins ride on bearings mounted in the mountings (12A, 12B, 14A, 14B), in the ends of the bar members (16, 18) or in both.

6. A weighing apparatus (200) according to claim 5, wherein the primary and the secondary housings (24, 30) of each of the weighing modules (10) include a base member and a cover member, the base member comprising a base (26) with sidewalls (28) extending outwardly there from, the cover member being engagable with the sidewalls (28) to define, between the base (26), the sidewalls (28) and the cover member, an inner cavity for housing the common mounting members (12,14) and respective ends of the bar members (16, 18) mounted thereto.

7. A weighing apparatus (200) according to claim 6, wherein the primary housings (24) of each of the weighing modules (10) are attachable to the idler assembly (300) by idler support brackets (46) extending outwardly from the primary housing (24), and the secondary housings (30) of each of the weighing modules (10) are attachable to the runner structure (400) by mounting brackets (48) extending outwardly from the secondary housing (30).

8. An idler assembly (300) for weighing a load passing there over including:
a support bracket (46) for supporting one or more idler mounting sub-brackets on which idlers are supportable;
a weighing apparatus (200) in accordance with any one of claims 1 to 7, the primary housings (24) of each of the weighing modules (10) being attached to opposing ends of the support bracket (46); and
a cross member (38) attached at each opposing end to the secondary housings (30) of the weighing modules (10), the secondary housings (30) being attachable to opposing sides of the runner structure (400) of the conveyor belt assembly.

## Patentansprüche

1. Eine Wiegevorrichtung (200) zum Wiegen einer Last, die auf eine Förderbandanordnung aufgebracht wird, wobei die Wiegevorrichtung Folgendes umfasst:
ein Paar Wiegemodule (10), die jeweils Folgendes aufweisen:
mindestens eine erste Halterung (12A) und mindestens eine zweite Halterung (12B), die an einem primären Gehäuse (24) befestigbar sind, wobei das primäre Gehäuse (24) an einer Laufrollenanordnung (300) der Förderbandanordnung befestigbar ist, so dass die erste und die zweite Halterung voneinander beabstandet sind;
mindestens eine dritte Halterung (14A) und mindestens eine vierte Halterung (14B), die an einem sekundären Gehäuse (30) befestigbar sind, wobei das sekundäre Gehäuse (30) an einer Laufschienen- bzw. Läuferstruktur (400) der Förderbandanordnung derart befestigbar ist, dass die dritte und vierte Halterung voneinander beabstandet sind;
mindestens ein erstes Stabelement (16) mit einem ersten Ende, das schwenkbar an der ersten Halterung (12A) angebracht ist, und mit einem gegenüberliegenden zweiten Ende, das schwenkbar an der dritten Halterung (14A) angebracht ist;
mindestens ein zweites Stabelement (18) mit einem ersten Ende, das schwenkbar an der zweiten Halterung (12B) angebracht ist, und mit einem gegenüberliegenden zweiten Ende, das schwenkbar an der vierten Halterung (14B) angebracht ist, so dass das primäre und das sekundäre Gehäuse (24, 30) durch die Stabelemente (16, 18) voneinander beabstandet sind, um einen Spalt (36) zwischen dem primären und dem sekundären Gehäuse (24, 30) zu definieren, wobei jedes Ende der Stabelemente (16, 18) schwenkbar an den Halterungen mittels eines Halterungsstifts befestigt ist, der durch entsprechend ausgerichtete Halterungsöffnungen (22) hindurchgeht, die in dem jeweiligen Ende der Stabelemente (16, 18) und der jeweiligen Halterung definiert sind, um das erste und das zweite Stabelement (16, 18) jedes der jeweiligen Wiegemodule in einer beabstandeten und parallelen Ausrichtung relativ zueinander zu halten; und
eine oder mehrere Wiegezellen (20), die zwischen dem primären und dem sekundären Gehäuse (24, 30) über den Spalt (36), der zwischen dem primären und dem sekundären Gehäuse (24, 30) definiert ist, verbunden sind;
wobei die Wiegevorrichtung (200) ein Querelement (38) enthält, das die sekundären Gehäuse (30) jedes der Wiegemodule (10) miteinander verbindet;
so dass im Gebrauch und unter Last die Stabelemente (16, 18) und Halterungen (12A, 12B; 14A, 14B) miteinander zusammenwirken, um im Wesentlichen jede Kraftkomponente aufzuheben, die in einer Ebene koplanar oder im Wesentlichen parallel zu einer Ebene wirkt, in der die Stabelemente (16, 18) liegen, um dadurch der Wiegezelle (20) zu ermöglichen, im Wesentlichen nur eine Belastung zu messen, die durch das Gewicht der Last auf der Förderbandanordnung verursacht wird.

2. Wiegevorrichtung (200) nach Anspruch 1, wobei jede der Halterungen (12A, 12B, 14A, 14B) eine gabelförmige Halterungsformation zur Aufnahme des jeweiligen Endes des jeweiligen Stabelements (16, 18) ist, wobei der Halterungsstift das Ende des Stabelements (16, 18) innerhalb der gabelförmigen Halterungsformation (12A, 12B, 14A, 14B) schwenkbar einfängt.

3. Wiegevorrichtung (200) nach Anspruch 1, wobei jede der Halterungen (12A, 12B, 14A, 14B) eine vorstehende bzw. männliche Halterungsformation aufweist und jedes der Enden der Stabelemente (16, 18) gabelartige Formationen zur Aufnahme der männlichen Halterungsformation darin sind, wobei der Halterungsstift die männliche Halterungsformation der Halterung innerhalb der gabelartigen Halterungsformation der Stabelemente (16, 18) schwenkbar einfängt.

4. Wiegevorrichtung (200) nach einem der Ansprüche 1 bis 3, wobei:
(i) die erste und die zweite Halterung (12A, 12B) jedes der Wiegemodule (10) gegenüberliegende Enden eines gemeinsamen primären Halterungselements (12) sind, wobei das gemeinsame primäre Halterungselement (12) an dem primären Gehäuse (24) befestigbar ist; und
(ii) die dritte und die vierte Halterung (14A, 14B) jedes der Wiegemodule (10) einander gegenüberliegende Enden eines gemeinsamen sekundären Halterungselements (14) sind, wobei das gemeinsame sekundäre Halterungselement (14) an dem sekundären Gehäuse (30) befestigbar ist.

5. Wiegevorrichtung (200) nach Anspruch 4, wobei die Halterungsstifte auf Lagern laufen, die in den Halterungen (12A, 12B, 14A, 14B), in den Enden der Stabelemente (16, 18) oder in beiden montiert sind.

6. Wiegevorrichtung (200) nach Anspruch 5, wobei das primäre und das sekundäre Gehäuse (24, 30) jedes der Wiegemodule (10) ein Basiselement und ein Abdeckelement aufweisen, wobei das Basiselement eine Basis (26) mit sich von dieser nach außen erstreckenden Seitenwänden (28) umfasst, und wobei das Abdeckelement mit den Seitenwänden (28) in Eingriff gebracht werden kann, um zwischen der Basis (26), den Seitenwänden (28) und dem Abdeckelement einen inneren Hohlraum zur Aufnahme der gemeinsamen Halterungselemente (12, 14) und der jeweiligen Enden der daran befestigten Stabelemente (16, 18) zu definieren.

7. Wiegevorrichtung (200) nach Anspruch 6, wobei die primären Gehäuse (24) jedes der Wiegemodule (10) an der Laufrollenanordnung (300) durch Tragkonsolen bzw. Haltebügel (46), die sich von dem primären Gehäuse (24) nach außen erstrecken, befestigbar sind und die sekundären Gehäuse (30) jedes der Wiegemodule (10) an der Läuferstruktur (400) durch Halterungsklammern (48), die sich von dem sekundären Gehäuse (30) nach außen erstrecken, befestigbar sind.

8. Eine Laufrollenanordnung (300) zum Wiegen einer darüber laufenden Last, wobei die Laufrollenanordnung Folgendes aufweist:
eine Tragkonsole bzw. einen Haltebügel (46) zum Tragen einer oder mehrerer Laufrollenhalterungsunterkonsolen, auf denen Laufrollen getragen werden können;
eine Wiegevorrichtung (200) nach einem der Ansprüche 1 bis 7, wobei die primären Gehäuse (24) jedes der Wiegemodule (10) an gegenüberliegenden Enden der Tragkonsole (46) befestigt sind; und
ein Querelement (38), das an jedem gegenüberliegenden Ende an den sekundären Gehäusen (30) der Wiegemodule (10) befestigt ist, wobei die sekundären Gehäuse (30) an gegenüberliegenden Seiten der Laufschienen- bzw. Läuferstruktur (400) der Förderbandanordnung befestigbar sind.

## Revendications

1. Appareil de pesage (200) pour peser une charge appliquée à un ensemble formant bande transporteuse comprenant :
une paire de modules de pesage (10) comprenant chacun :
au moins une première monture (12A) et au moins une deuxième monture (12B) pouvant être attachées à un boîtier primaire (24), le boîtier primaire (24) pouvant être fixé à un ensemble de roues libres (300) de l'ensemble formant bande transporteuse de telle sorte que les premier et deuxième montures sont espacées l'un de l'autre ;
au moins une troisième monture (14A) et au moins une quatrième monture (14B) pouvant être fixées à un boîtier secondaire (30), le boîtier secondaire (30) pouvant être fixé à une structure de glissière (400) de l'ensemble formant bande transporteuse de telle sorte que les troisième et quatrième montures sont espacées l'une de l'autre ;
au moins un premier élément de barre (16) ayant une première extrémité montée de manière pivotante sur la première monture (12A) et une deuxième extrémité opposée montée de manière pivotante sur la troisième monture (14A) ;
au moins un deuxième élément de barre (18) ayant une première extrémité montée de manière pivotante sur la deuxième monture (12B) et une deuxième extrémité opposée pour un montage pivotant sur la quatrième monture (14B) de telle sorte que les boîtiers primaire et secondaire (24, 30) soient espacés l'un de l'autre par les éléments de barre (16, 18) pour définir un espace (36) entre les boîtiers primaire et secondaire (24, 30), dans lequel chaque extrémité des éléments de barre (16, 18) est montée de manière pivotante sur les montures par une broche de montage passant à travers des ouvertures de montage alignées de façon correspondante (22) définies dans l'extrémité respective des éléments de barre (16, 18) et de la monture respectif de manière à retenir les premier et deuxième éléments de barre (16, 18) de chacun des modules de pesage respectifs dans une orientation espacée et parallèle les uns par rapport aux autres ; et
une ou plusieurs cellules de pesage (20) connectées entre les boîtiers primaire et secondaire (24, 30) à travers l'espace (36) défini entre les boîtiers primaire et secondaire (24, 30) ;
dans lequel l'appareil de pesage (200) comprend un élément transversal (38) reliant les boîtiers secondaires (30) de chacun des modules de pesage (10) les uns aux autres ;
de telle sorte qu'en utilisation et sous charge, les éléments de barre (16, 18) et les montures (12A, 12B ; 14A, 14B) coopèrent les uns avec les autres pour annuler sensiblement toute composante de force agissant dans un plan coplanaire ou sensiblement parallèle à un plan dans lequel se trouvent les éléments de barre (16, 18), pour permettre ainsi à la cellule de charge (20) de mesurer sensiblement uniquement une contrainte provoquée par le poids de la charge sur l'ensemble formant bande transporteuse.

2. Appareil de pesage (200) selon la revendication 1, dans lequel chacune des montures (12A, 12B, 14A, 14B) est une formation de montage en forme de fourche pour recevoir l'extrémité respective de l'élément de barre respectif (16, 18), la broche de montage capturant de manière pivotante l'extrémité de l'élément de barre (16, 18) à l'intérieur de la formation de montage en forme de fourche (12A, 12B, 14A, 14B).

3. Appareil de pesage (200) selon la revendication 1, dans lequel chacune des montures (12A, 12B, 14A, 14B) comprend une formation de montage mâle et chacune des extrémités des éléments de barre (16, 18) est en forme de fourche pour recevoir la formation de montage mâle à l'intérieur, la broche de montage capturant de manière pivotante la formation de montage mâle de la monture à l'intérieur de la formation de montage en forme de fourche des éléments de barre (16, 18).

4. Appareil de pesage (200) selon l'une quelconque des revendications 1 à 3, dans lequel :
(i) les première et deuxième montures (12A, 12B) de chacun des modules de pesage (10) sont des extrémités opposées d'un élément de montage primaire commun (12), l'élément de montage primaire commun (12) pouvant être fixé au boîtier primaire (24) ; et
(ii) les troisième et quatrième montures (14A, 14B) de chacun des modules de pesage (10) sont des extrémités opposées d'un élément de montage secondaire commun (14), l'élément de montage secondaire commun (14) pouvant être fixé au boîtier secondaire (30).

5. Appareil de pesage (200) selon la revendication 4, dans lequel les broches de montage sont supportés par des paliers montés dans les montures (12A, 12B, 14A, 14B), dans les extrémités des éléments de barre (16, 18) ou dans les deux.

6. Appareil de pesage (200) selon la revendication 5, dans lequel les boîtiers primaire et secondaire (24, 30) de chacun des modules de pesage (10) comprennent un élément de base et un élément de couvercle, l'élément de base comprenant une base (26) avec des parois latérales (28) s'étendant vers l'extérieur à partir de celle-ci, l'élément de couvercle pouvant venir en prise avec les parois latérales (28) pour définir, entre la base (26), les parois latérales (28) et l'élément de couvercle, une cavité intérieure pour loger les éléments de montage communs (12, 14) et des extrémités respectives des éléments de barre (16, 18) montés sur ceux-ci.

7. Appareil de pesage (200) selon la revendication 6, dans lequel les boîtiers primaires (24) de chacun des modules de pesage (10) peuvent être attachés à l'ensemble de roues libres (300) par des consoles de support de roues libres (46) s'étendant vers l'extérieur à partir du boîtier primaire (24) et le boîtier secondaire (30) de chacun des modules de pesage (10) peuvent être fixés à la structure de glissière (400) par des consoles de montage (48) s'étendant vers l'extérieur depuis le boîtier secondaire (30).

8. Un ensemble de roues libres (300) pour peser une charge qui y passe, comprenant :
une console de support (46) pour supporter un ou plusieurs sous-supports de montage de rouleaux sur lesquels des rouleaux peuvent être supportés ;
un appareil de pesage (200) selon l'une quelconque des revendications 1 à 7, les boîtiers primaires (24) de chacun des modules de pesage (10) étant fixés aux extrémités opposées de la console de support (46) ;
un élément transversal (38) fixé à chaque extrémité opposée aux boîtiers secondaires (30) des modules de pesage (10), les boîtiers secondaires (30) pouvant être fixés aux côtés opposés de la structure de guidage (400) de l'ensemble formant bande transporteuse.
